# EUROPÄISCHE PATENTANMELDUNG

(11) **EP 0 673 801 A1**
(43) Veröffentlichungstag der Anmeldung: **27.09.1995**
(21) Anmeldenummer: 95103379.4
(22) Anmeldetag: 09.03.1995
(51) Int. Cl.: B60R 1/12, H01Q 1/32

(54) **Aussenrückblickspiegel für Kraftfahrzeuge**

(30) Priorität: 26.03.1994 DE 4410618
(71) Anmelder: REITTER & SCHEFENACKER GmbH & Co. KG, D-73730 Esslingen (DE)
(72) Erfinder: Kübler, Walter, D-74420 Oberrot (DE)
(74) Vertreter: Jackisch-Kohl, Anna-Katharina

(57) **Zusammenfassung**

Der Außenrückblickspiegel hat ein Spiegelgehäuse (2), in dem ein Spiegelglas (4) untergebracht ist. Es wird mit einem Heizleiter (8) beheizt. Kraftfahrzeuge sind in der Regel mit Autoradios ausgestattet, an die eine Antenne angeschlossen ist. Zu ihrer Befestigung muß die Karosserie durchbohrt werden, was aufwendig ist und Abdichtungsprobleme mit sich bringt. Um eine einfache, preisgünstig herzustellende und zu montierende Antenne für das Kraftfahrzeugradio vorzusehen, ist der Heizleiter (8) mit einem Radio des Kraftfahrzeuges verbunden. Der Heizleiter bildet eine im Außenrückblickspiegel untergebrachte Antenne, wodurch eine zusätzliche, gesondert zu montierende und aufwendig ausgebildete Antenne entfallen kann.

## Beschreibung

Die Erfindung betrifft einen Außenrückblickspiegel für Kraftfahrzeuge nach dem Oberbegriff des Anspruches 1.

Außenrückblickspiegel für Kraftfahrzeuge sind am Türholm oder an der Fahrzeugtüre oder unter Zwischenschaltung eines mehr oder weniger langen Spiegelhalters an der Fahrzeugkarosserie befestigt. Es ist bekannt, das Spiegelglas solcher Außenrückblickspiegel zu beheizen. Kraftfahrzeuge sind in der Regel mit Autoradios ausgestattet, an die eine Antenne angeschlossen ist, die z.B. auf dem Fahrzeugdach oder im Front- oder Heckbereich des Fahrzeuges an der Fahrzeugkarosserie befestigt ist. Hierzu muß die Karosserie durchbohrt werden, was aufwendig ist und Abdichtungsprobleme mit sich bringt. Die Bohrungen in der Karosserie bilden korrosionsgefährdete Bereiche. Ferner sind die verwendeten Antennen aufwendig und teuer in der Herstellung.

Der Erfindung liegt die Aufgabe zugrunde, eine einfache, preisgünstig herzustellende und zu montierende Antenne für das Kraftfahrzeugradio vorzusehen.

Diese Aufgabe wird bei einem Außenrückblickspiegel der gattungsbildenden Art erfindungsgemäß mit den kennzeichnenden Merkmalen des Anspruches 1 gelöst.

Bei der erfindungsgemäßen Ausbildung bildet der Heizleiter eine im Außenrückblickspiegel untergebrachte Antenne. Dadurch kann eine zusätzliche, gesondert zu montierende und aufwendig ausgebildete Antenne entfallen. Die Antenne braucht nicht an der Karosserie befestigt zu werden, so daß die Karosserie auch nicht durchbohrt oder abgedichtet werden muß. Korrosionsprobleme treten darum nicht auf. Mit der erfindungsgemäßen Ausbildung kann auf äußerst einfache und kostengünstige Weise eine Antenne für das Kraftfahrzeugradio vorgesehen werden.

Weitere Merkmale der Erfindung ergeben sich aus den weiteren Ansprüchen, der Beschreibung und der Zeichnung.

Die Erfindung wird nachstehend anhand eines in der Zeichnung dargestellten Ausführungsbeispieles näher erläutert. Es zeigt
- Fig. 1: einen erfindungsgemäßen Außenrückblickspiegel in Ansicht gemäß Pfeil I in Fig. 2,
- Fig. 2: eine Glasträgerplatte des Außenrückblickspiegels nach Fig. 1 im Längsschnitt.

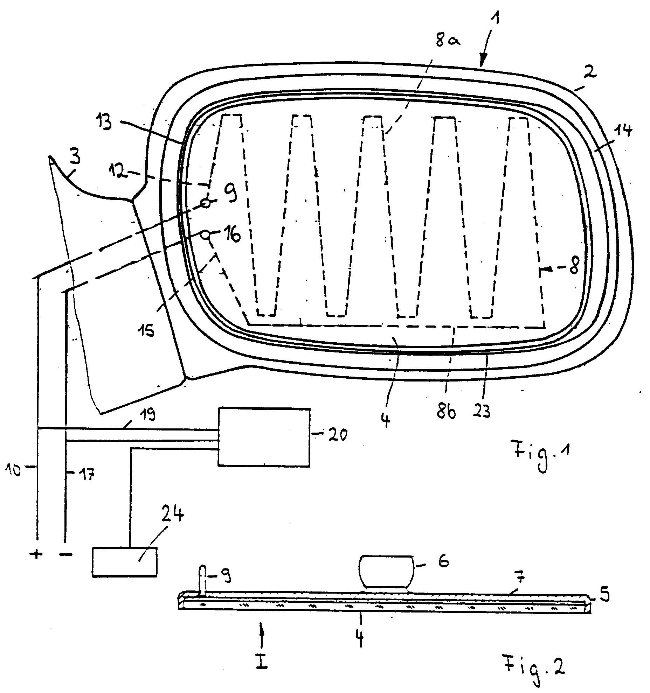

Der Außenrückblickspiegel 1 gemäß den Fig. 1 und 2 weist ein Spiegelgehäuse 2 auf, das mit einem Spiegelfuß 3 an einem (nicht dargestellten) Kraftfahrzeug befestigt wird. Im Spiegelgehäuse 2 ist ein Spiegelglasträger 5 angeordnet, der über ein Gelenk 6 (Fig. 2) schwenkbar im Spiegelgehäuse 2 angeordnet ist. Auf dem Spiegelglasträger 5 ist ein Spiegelglas 4 befestigt. Zwischem dem Boden 7 des Spiegelglasträgers 5 und dem Spiegelglas 4 ist eine Spiegelheizung in Form eines Heizleiters 8 vorgesehen (Fig. 1), dessen beide Enden Anschlüsse 9, 16 haben, die, wie Fig. 2 zeigt, nach hinten über den Boden 7 des Spiegelglasträgers 5 ragen. Der Heizleiter 8 wird durch einen Heizdraht gebildet, mit dem das Spiegelglas 4 in bekannter Weise beheizt wird. Der Heizleiter kann aber auch durch eine gedruckte Schaltung gebildet sein. An die Anschlüsse 9, 16 sind Leitungen 10, 17 angeschlossen, die mit der Fahrzeugbatterie verbunden sind. Die Anschlüsse 9, 10 sind benachbart zur einen Schmalseite 13 des Spiegelgehäuses 2 und zum Spiegelfuß 3 vorgesehen. Die Leitungen 10, 17 sind durch den Spiegelfuß 3 hindurchgeführt.

Der Heizleiter 8 hat einen etwa mäanderförmig verlaufenden Heizleiterabschnitt 8a, dessen eines Ende 12 vom Anschluß 9 aus nahezu über die ganze Länge und Breite des Spiegelgehäuses 4 sich erstreckt und an der vom Spiegelfuß 3 abgewandten Schmalseite 14 des Spiegelgehäuses 2 in einen geraden Heizleiterabschnitt 8b übergeht. Er verläuft im wesentlichen parallel zur unteren Längsseite 23 des Spiegelgehäuses 2 im Bereich unterhalb des mäanderförmigen Heizleiterabschnittes 8a und schließt mit seinem freien Ende 15 an den Anschluß 16 an, der mit geringem Abstand unterhalb des Anschlußes 9 liegt. An die Leitung 10 ist eine Leitung 19 angeschlossen, die über einen Verstärker 20 mit einem Radio 24 des Kraftfahrzeuges verbunden ist. Der Verstärker 20 ist im übrigen in bekannter Weise an die Fahrzeugbatterie angeschlossen.

Der Heizleiter 8 dient gleichzeitig als Antenne für das Radio 24, so daß mit ihm nicht nur das Spiegelglas 4 beheizt, sondern auch die Funksignale empfangen werden können. Infolge des mäanderförmigen Verlaufs des Heizleiterabschnittes 8a können auch schwache Signale gut empfangen werden. Zudem wird durch diese Anordnung das Spiegelglas 4 über seine gesamte Fläche optimal beheizt. Der Heizleiter 8 kann selbstverständlich unter Berücksichtigung eines guten Empfanges der Funksignale und der Beheizung des Spiegelglases 4 auf andere Weise verlegt werden. Eine gesonderte Antenne, die auf dem Fahrzeugdach oder im Front- oder Heckbereich des Fahrzeuges befestigt werden muß, kann entfallen. Dadurch wird auf konstruktiv einfache Weise über die ohnehin vorgesehene Beheizung des Spiegelglases 4 ein einwandfreier Rundfunkempfang für das Autoradio 20 erreicht. Der Heizleiter 8 läßt sich problemlos montieren und ist preisgünstig, wodurch erhebliche Kosten für eine zusätzliche Antenne eingespart werden.

Üblicherweise haben Kraftfahrzeuge an der rechten und der linken Fahrzeugseite jeweils einen Außenrückblickspiegel. Zur Verbesserung des Rundfunkempfangs ist es in diesem Fall vorteilhaft, die Heizungen beider Außenrückblickspiegel als Antenne zu nutzen. Die Spiegelantenne stört nicht die ästhetische Gesamterscheinung des Wagens. Sie ist bei Benutzung einer Fahrzeugwaschanlage nicht gefährdet, da ein einzuschiebender oder abzuschraubender Antennenstab entfällt. Das Problem mit mutwillig abgeknickten Antennenstäben entfällt ebenfalls.

## Patentansprüche

1. Außenrückblickspiegel für Kraftfahrzeuge, mit einem Spiegelgehäuse, in dem ein Spiegelglas untergebracht ist, das mit mindestens einem Heizleiter beheizbar ist, dadurch gekennzeichnet, daß der Heizleiter (8)
mit einem Radio (24) des Kraftfahrzeuges verbunden ist.

2. Außenrückblickspiegel nach Anspruch 1,
dadurch gekennzeichnet, daß der Heizleiter (8) zwischen dem Spiegelgehäuse (2) und dem Spiegelglas (4) vorgesehen ist.

3. Außenrückblickspiegel nach Anspruch 1 oder 2,
dadurch gekennzeichnet, daß der Heizleiter (8) als Heizdraht ausgebildet ist.

4. Außenrückblickspiegel nach Anspruch 1 oder 2,
dadurch gekennzeichnet, daß der Heizleiter (8) als gedruckte Schaltung ausgebildet ist.

5. Außenrückblickspiegel nach einem der Ansprüche 1 bis 4,
dadurch gekennzeichnet, daß der Heizleiter (8) über die ganze Breite und/oder Länge des Spiegelglases (4) vorgesehen ist.

6. Außenrückblickspiegel nach einem der Ansprüche 1 bis 5,
dadurch gekennzeichnet, daß der Heizleiter (8) einen in Längsrichtung des Spiegelgehäuses (2) mäanderförmig verlaufenden Heizleiterabschnitt (8a) aufweist.
